(19) Europäisches Patentamt
European Patent Office
Office européen des brevets

(11) **EP 3 172 010 B1**

(12) **FASCICULE DE BREVET EUROPEEN**

(45) Date de publication et mention
de la délivrance du brevet:
**09.05.2018 Bulletin 2018/19**

(21) Numéro de dépôt: **15751055.3**

(22) Date de dépôt: **23.07.2015**

(51) Int Cl.:
***B24B 9/14*** *(2006.01)*     ***B24B 49/12*** *(2006.01)*
***B24B 1/00*** *(2006.01)*     ***G02C 13/00*** *(2006.01)*

(86) Numéro de dépôt international:
**PCT/FR2015/052033**

(87) Numéro de publication internationale:
**WO 2016/012721 (28.01.2016 Gazette 2016/04)**

(54) **PROCÉDÉ D'ÉLABORATION D'UNE CONSIGNE DE DÉTOURAGE D'UNE LENTILLE OPTIQUE**

VERFAHREN ZUR AUSARBEITUNG VON EINSTELLUNGEN ZUM SCHLEIFEN EINER OPTISCHEN LINSE

METHOD FOR WORKING OUT SETTINGS FOR EDGING AN OPTICAL LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2014 FR 1457238**

(43) Date de publication de la demande:
**31.05.2017 Bulletin 2017/22**

(73) Titulaire: **Essilor International**
**94220 Charenton-le-Pont (FR)**

(72) Inventeurs:
• **ANATOLE, Vincent**
**94220 Charenton-Le-Pont (FR)**
• **SILEO, Cedric**
**78182 Saint Quentin en Yvelines (FR)**

(74) Mandataire: **Jacobacci Coralis Harle**
**32, rue de l'Arcade**
**75008 Paris (FR)**

(56) Documents cités:
EP-A2- 2 489 466    WO-A1-96/29177
FR-A1- 2 910 644    US-A- 5 428 448

**Description**

DOMAINE TECHNIQUE AUQUEL SE RAPPORTE L'INVENTION

La présente invention concerne de manière générale le détourage de lentilles optiques en vue de leur montage dans une monture de lunettes.

Elle concerne plus particulièrement un procédé de détermination de paramètres de détourage d'une lentille optique à détourer en vue de son montage dans une monture de lunettes dans laquelle est déjà montée une lentille optique de référence.

ARRIERE-PLAN TECHNOLOGIQUE

La partie technique du métier de l'opticien consiste à monter une paire de lentilles optiques sur une monture de lunettes sélectionnée par un porteur.

Ce montage se décompose en trois opérations principales :

-   l'acquisition de la géométrie du contour intérieur de l'un des entourages de la monture de lunettes sélectionnée,
-   le centrage de la lentille considérée qui consiste à positionner et à orienter convenablement ce contour sur la lentille de manière qu'une fois montée dans sa monture, cette lentille soit correctement positionnée par rapport à l'oeil correspondant du porteur afin qu'elle puisse exercer au mieux la fonction optique pour laquelle elle a été conçue, puis
-   le détourage de la lentille qui consiste à usiner son contour à la forme souhaitée.

L'opération de détourage consiste à éliminer la partie périphérique superflue de la lentille optique concernée, pour en ramener le contour, qui est le plus souvent initialement circulaire, à un contour de forme identique à celle du contour de l'entourage de la monture de lunettes ou de forme approchée.

La qualité de cette opération de détourage dépend en grande partie de la précision de l'opération d'acquisition de la forme du contour de l'entourage de la monture de lunettes (voir par exemple EP2489466). Concrètement, lorsque la monture de lunettes est cerclée, cette opération d'acquisition consiste généralement, pour l'opticien, à palper le contour intérieur de l'entourage de la monture des lunettes sélectionnée afin de déterminer précisément les coordonnées de points caractérisant la forme du contour de cet entourage.

En revanche, lorsque la monture de lunettes est de type semi-cerclé ou sans cercle (les lentilles étant alors percées), on utilise un gabarit (c'est-à-dire généralement une lentille de référence fournie à l'opticien avec la monture de lunettes) pour déterminer la forme que devra présenter la lentille optique à détourer. Une acquisition optique d'une image de ce gabarit extrait de la monture de lunettes permet en effet de relever la forme du contour de ce gabarit ainsi que la position des éventuels trous de ce gabarit.

Dans ce cas, la seule acquisition d'une image de face du gabarit ne permet pas d'acquérir toutes les données nécessaires au détourage de la lentille optique.

A titre d'exemple, il n'est pas possible de relever sur cette image quelles sont les contraintes qui sont liées à l'épaisseur de la monture ou à la position des plaquettes nasales de la monture et qui doivent être considérées pour le détourage de la lentille optique (afin que cette dernière se monte sans difficulté et du premier coup dans la monture de lunettes). On comprend en effet que si les plaquettes nasales de la monture de lunettes sont très rapprochés des gabarits et que la lentille à détourer est épaisse, il faudra détourer la lentille de telle sorte qu'elle ne vienne pas en appui contre la plaquette nasale.

Par ailleurs, sauf à utiliser un objectif télécentrique, l'acquisition d'une image de face d'un gabarit ne permet pas d'obtenir une précision suffisante pour acquérir la forme du contour de ce gabarit. En effet, puisque le gabarit est courbé, la distance entre le capteur d'images et le gabarit varie d'un point à l'autre du gabarit, ce qui génère des variations d'échelle d'un point à l'autre de l'image. Or, l'utilisation d'un objectif télécentrique s'avère particulièrement onéreux.

Enfin, les trous n'étant généralement pas orientés dans l'axe du capteur d'images, il s'avère difficile de caractériser précisément leur forme à partir de l'image de face du gabarit.

OBJET DE L'INVENTION

Afin de remédier aux inconvénients précités de l'état de la technique, la présente invention propose une nouvelle méthode optique d'acquisition du contour de l'entourage de la monture de lunettes, utilisable quel que soit le type de la monture de lunettes.

Plus particulièrement, on propose selon l'invention un procédé de détermination de paramètres de détourage d'une lentille optique à détourer en vue de son montage dans une monture de lunettes dans laquelle est montée au moins une lentille optique de référence, comprenant :

- une étape de démontage de ladite lentille optique de référence,
- une étape de fixation de ladite lentille optique de référence démontée sur un support d'une machine d'acquisition d'images,
- une première étape d'acquisition, par un capteur d'images de ladite machine d'acquisition d'images, d'au moins une première image de ladite lentille optique de référence démontée,
- avant ou après ladite première étape d'acquisition, une seconde étape d'acquisition par le capteur d'images d'une seconde image de ladite lentille optique de référence montée dans la monture de lunettes, et
- une étape de traitement de chaque image acquise pour en déduire des paramètres de détourage de ladite lentille optique à détourer.

Les paramètres de détourage pourront ensuite être utilisés pour élaborer une consigne de détourage de la lentille optique à détourer.

La lentille optique de référence est une lentille qui se trouve initialement dans la monture de lunettes. En pratique, il s'agira généralement d'une lentille de démonstration, que l'opticien souhaitera remplacer par une lentille à détourer, cette lentille à détourer présentant par exemple des puissances optiques adaptées à l'acuité visuelle du futur porteur de lunettes.

Alors, grâce à l'invention, même dans le cas des montures de lunettes cerclées, on détermine la forme selon laquelle il faudra détourer cette lentille à partir de l'image de la lentille de référence démontée et de l'image de la lentille de référence montée dans sa monture.

L'image de la lentille de référence démontée permettra de relever la forme du contour de la lentille de référence.

En superposant les deux images de la lentille de référence, démontée et montée dans la monture, il sera en outre possible de déterminer des paramètres de détourage supplémentaires liés aux contraintes de montage de la lentille de référence dans sa monture de lunettes.

Dans un mode de réalisation de l'invention, ces deux images pourront être prises de face par un objectif non télécentrique. Il sera en outre pris une image de côté de la lentille de référence. Cette image de la lentille vue de côté permettra alors de déterminer le rayon de courbure de la lentille et donc de déterminer la distance en tout point séparant la lentille et l'objectif non télécentrique (ce qui permettra de mettre à l'échelle les images de la lentille vue de face). On obtiendra ainsi des résultats proches de ceux obtenus avec un objectif télécentrique, pour un coût sensiblement moindre.

En variante, le rayon de courbure de la lentille pourra être lu par l'opticien sur une étiquette accompagnant la lentille à détourer, et saisie manuellement par l'opticien, par exemple sur un clavier.

D'autres caractéristiques avantageuses et non limitatives du procédé conforme à l'invention sont les suivantes :

- au cours des première et seconde étapes d'acquisition, ladite lentille optique de référence est fixée sur ledit support dans une même position ;
- le capteur d'images comportant un objectif télécentrique, au cours de l'étape de traitement, lesdits paramètres de détourage sont directement mesurés ou calculés sur chaque image acquise ;
- le capteur d'images comportant un objectif non télécentrique, au cours de l'étape de traitement, on acquiert la courbure de l'une des faces de ladite lentille optique de référence, on met à l'échelle chaque image acquise en fonction de ladite courbure, et on mesure ou calcule chaque paramètre de détourage sur les images mises à l'échelle ;
- au cours de ladite première et/ou de ladite seconde étape d'acquisition, le capteur d'images acquiert au moins deux images de ladite lentille optique de référence vue sous deux angles différents ;
- au cours de ladite première et/ou de ladite seconde étape d'acquisition, le capteur d'images acquiert une image de face de ladite lentille optique de référence, dans une position dans laquelle la lentille optique de référence s'étend dans un plan moyen sensiblement orthogonal à un axe du chemin optique dudit capteur d'images, et une image de côté de ladite lentille optique de référence, dans une position dans laquelle la lentille optique de référence s'étend dans un plan moyen sensiblement parallèle à un axe du chemin optique dudit capteur d'images ;
- à l'étape de traitement, la courbure de l'une des faces de ladite lentille optique de référence est mesurée sur ladite image de côté ;
- lesdites images de face et de côté sont acquises successivement, un miroir étant placé sur le chemin optique du capteur d'images entre les deux acquisitions d'images ;
- au cours de l'étape d'élaboration, on relève sur ladite image de face de la lentille optique de référence démontée la forme bidimensionnelle du contour de la lentille optique de référence ;
- au cours de ladite première et/ou de ladite seconde étape d'acquisition, lesdites au moins deux images de ladite lentille optique de référence vue sous deux angles différents sont acquises successivement, en inclinant, entre les deux acquisitions d'images, ladite lentille optique de référence par rapport au capteur d'images d'un angle connu autour d'un axe de rotation qui passe par le centre boxing de la lentille optique de référence ;
- au cours de l'étape d'élaboration, on recherche chaque trou de perçage de la lentille optique de référence, pour chaque trou de perçage trouvé, on sélectionne l'image sur laquelle les contours des débouchés avant et arrière dudit trou de perçage sont les plus proches, et au moins un paramètre de détourage est affecté à la caractérisation de la forme et de la position dudit trou de perçage sur l'image sélectionnée.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

-  la figure 1 est une vue schématique d'une machine d'acquisition d'images adaptée à mettre en oeuvre le procédé selon l'invention ;
-  la figure 2 est une vue schématique en coupe d'un set de trois embouts de blocage appartenant à la machine d'acquisition d'images de la figure 1 ;
-  la figure 3 est une vue schématique en perspective d'un gland de blocage adapté à être collé sur une lentille ;
-  la figure 4 est une vue schématique en perspective d'une variante de réalisation du support de la machine d'acquisition d'images de la figure 1 ;
-  la figure 5 est une vue schématique de côté illustrant l'acquisition de deux images d'une lentille au moyen de la machine d'acquisition d'images de la figure 1 ;
-  la figure 6 représente une image vue de face d'une lentille optique ;
-  la figure 7 représente en superposition deux images d'une lentille optique vue de face, avec et sans monture de lunettes d'une lentille optique ; et
-  la figure 8 représente dix photos d'une lentille optique vue sous cinq angles différents, avec et sans monture de lunettes.

Il existe trois principales catégories de montures de lunettes. On distingue ainsi les montures de lunettes cerclées, les montures de lunettes semi-cerclées (également appelées montures à arcades) et les montures de lunettes sans cercle (également appelées montures percées).

Les montures de lunettes cerclées comportent classiquement deux entourages qui sont destinés à accueillir chacun une lentille optique détourée. Ces deux entourages sont reliés l'un à l'autre par un pontet et portent chacun une branche. Chaque entourage présente une rainure, communément appelée drageoir, qui court le long de sa face intérieure.

Lorsque la monture de lunettes est cerclée, la lentille optique doit être détourée de manière à présenter le long de sa tranche une nervure d'emboîtement, communément appelée biseau, dont la section présente généralement une forme en V. Le biseau ainsi formé sur la tranche de la lentille est alors adapté à venir s'emboîter dans le drageoir de la monture cerclée.

Les montures de lunettes semi-cerclées comportent deux arcades sur les faces intérieures desquelles s'étendent des nervures, ainsi que deux fils de maintien qui sont raccordés aux extrémités des arcades pour former avec celles-ci des contours fermés.

Lorsque la monture de lunettes est semi-cerclée, la lentille optique doit être détourée de manière à présenter en creux le long de sa tranche une rainure périphérique. La lentille est alors maintenue en place dans la monture de lunettes en emboîtant la partie supérieure de sa tranche dans la nervure prévue le long de la face interne de l'arcade correspondante, et en engageant le fil de maintien dans la rainure.

Enfin, les montures de lunettes sans-cercle comportent deux branches et un pontet, mais sont dépourvues d'entourage ou d'arcade. Ces branches et ce pontet sont en revanche dotés d'ergots adaptés à s'insérer dans des trous de perçage préalablement réalisés dans les lentilles optiques.

Lorsque la monture de lunettes est sans cercle, la lentille optique doit être détourée de manière à présenter une tranche dont la section est droite, puis être percée de manière à ce que l'on puisse y fixer solidement le pontet et la branche correspondante de la monture de lunettes.

Le métier de l'opticien est donc de monter une paire de lentilles neuves (on parle de « lentilles optiques à détourer ») sur la monture de lunettes sélectionnée par le porteur.

Il peut s'agir d'une monture de lunettes neuve, ou d'une monture de lunettes usagée (cas où le porteur de lunettes souhaite changer ses lentilles optiques tout en conservant sa monture de lunettes).

Dans le cas où elle est neuve, la monture de lunettes est généralement fournie à l'opticien avec des lentilles de présentation (ou gabarits) de puissances nulles et d'épaisseurs constantes.

Dans le cas où elle est usagée, la monture de lunettes est généralement fournie à l'opticien avec des lentilles optiques à remplacer.

Ces lentilles optiques qui se trouvent initialement dans la monture de lunettes (neuve ou usagée) seront dans la suite de cet exposé désignées par l'expression « lentilles de référence ».

Avant de détourer des lentilles optiques neuves afin de remplacer ces lentilles de référence, l'opticien doit mettre en oeuvre une opération d'acquisition du contour selon lequel chaque lentille optique neuve devra être détourée.

Ici, cette acquisition sera opérée en fonction de la forme de la monture de lunettes et en fonction de la forme des lentilles de référence qui se trouvent initialement dans la monture de lunettes. De cette manière, le procédé utilisé s'appliquera aussi bien aux montures de lunettes cerclées, qu'aux montures de lunettes semi-cerclées et qu'aux montures de lunettes sans cercle.

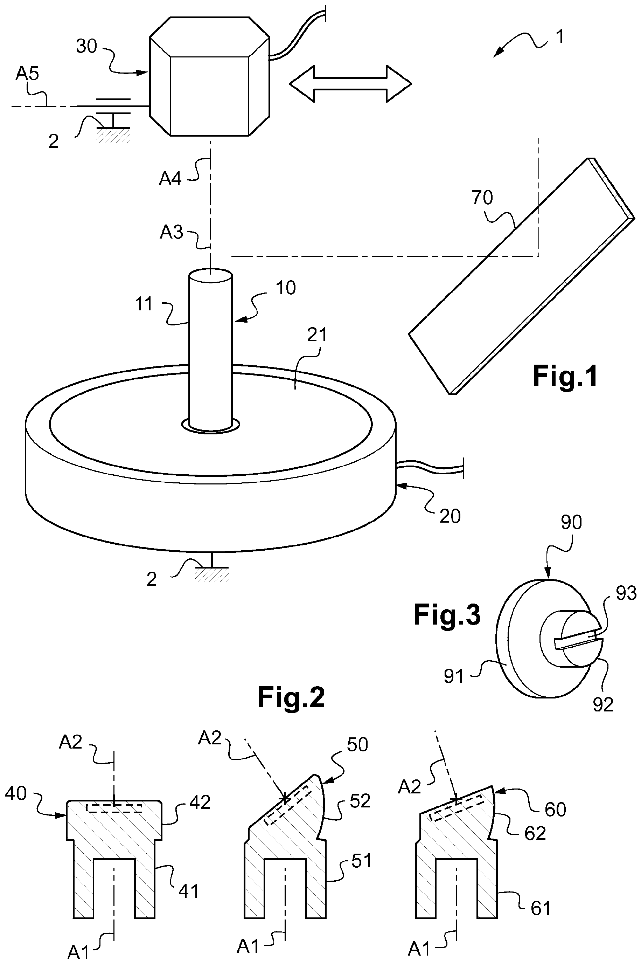

Comme le montre la figure 1, on utilisera pour cela une machine d'acquisition d'images 1 permettant d'acquérir des images d'une lentille de référence montée dans la monture de lunettes (on parlera dans la suite de cet exposé de « lentille de référence équipée ») ou démontée de celle-ci (on parlera dans la suite de cet exposé de « lentille de référence nue »).

Cette machine d'acquisition d'images 1 permettra en outre d'acquérir ces images de la lentille de référence, vue sous des angles différents.

Cette machine d'acquisition d'images 1 comporte à cet effet :

- un châssis 2,
- un support 10 pour une lentille de référence,
- d'un côté du support 10, une source de lumière 20,
- d'un côté ou de l'autre côté du support 10, un capteur d'images 30 adapté à capturer au moins deux images de la lentille de référence vue sous deux angles différents.

Pour acquérir deux images de la lentille de référence sous deux angles différents, on pourra prévoir de monter le capteur d'images 30 de telle manière qu'il soit mobile par rapport au châssis 2 et/ou de monter la lentille de référence sur le support 10 de telle manière qu'elle soit mobile par rapport au châssis 2.

Pour permettre de bloquer la lentille de référence équipée sur le support 10, le châssis 2 délimitera autour du support 10 un espace libre de taille suffisante.

Dans le mode de réalisation de la machine d'acquisition d'images 1 représentée sur la figure 1, le support 10 comporte une tige 11 dont l'extrémité libre est adaptée à supporter un embout de blocage, cet embout de blocage étant prévu pour recevoir la lentille de référence.

Cette tige 11 est ici droite. Elle s'étend selon un axe principal A3, qui est en pratique vertical. Ici, cette tige 11 est fixée au support 2 par son extrémité basse.

La source de lumière 20 comporte ici un système d'éclairage direct 21, qui permet d'éclairer la lentille de référence par le dessous, c'est-à-dire à l'opposé du capteur d'images 30 par rapport à la lentille.

Ce système d'éclairage direct 21 comporte un plateau translucide en forme de disque, qui est traversé en son centre par la tige 11 de telle manière qu'il s'étend tout autour de la tige 11.

Différentes sources lumineuses, telles que des diodes électroluminescentes, permettent d'éclairer par le dessous ce plateau translucide, de telle manière qu'il forme une source de lumière étendue.

En variante, on pourra prévoir de compléter ou de remplacer ce système d'éclairage direct 21 par un système d'éclairage latéral (non représenté) éclairant la lentille de référence par sa tranche. Ce système d'éclairage latéral pourra être placé sur le côté de la tige 11, à hauteur du dessus ou du dessous de l'extrémité libre de cette tige 11, de manière à éclairer la lentille de référence portée par cette tige 11.

Le capteur d'images 30 est quant à lui formé par une caméra numérique.

Cette caméra numérique pourrait comporter un objectif télécentrique. L'utilisation d'un objectif télécentrique permettrait de conserver un même rapport de grossissement de la lentille quelle que soit la distance de prise de vue. Malheureusement, un tel objectif est très complexe à fabriquer.

C'est la raison pour laquelle l'objectif choisi est ici non télécentrique (il s'agit donc d'un objectif entocentrique).

Ici, on se propose alors, comme cela sera bien décrit dans la suite de cet exposé, de traiter les images acquises de manière à tenir compte des changements d'échelles dues aux variations de distances de prise de vue, de manière à obtenir de résultats aussi précis que ceux qu'on obtiendrait en utilisant un objectif télécentrique.

Le capteur d'images 30 est ici monté sur le châssis 2 de telle manière que son axe optique A4 reste parallèle à l'axe principal A3 de la tige 11 du support 10.

Il est plus précisément ici monté mobile sur le châssis 2 de telle sorte qu'il peut acquérir non seulement une image de face de la lentille de référence, mais également une image de côté de cette lentille, sans qu'il soit nécessaire pour cela de bouger la lentille de référence.

Pour cela, le capteur d'images 30 est monté sur le châssis 2 avec une mobilité de translation suivant un axe A5 perpendiculaire à son axe optique A4. Il est ainsi mobile entre une position de base dans laquelle son axe optique A4 est confondu avec l'axe principal A3 de la tige 11, et une position escamotée dans laquelle son axe optique A4 est strictement parallèle à l'axe principal A3.

Il est en outre ici prévu un miroir 70 qui permet, lorsque le capteur d'images 30 est en position escamotée, de réfléchir une image du côté de la lentille de référence vers ce capteur d'images 30.

Ce miroir 70 s'étend à cet effet dans un plan dont la normale au centre du miroir coupe l'axe principal A3 avec un angle d'inclinaison de 45 degrés.

Ce miroir 70 est ainsi positionné de telle manière que, lorsque le capteur d'images 30 est en position escamotée, le miroir 70 se trouve dans le champ du capteur d'images.

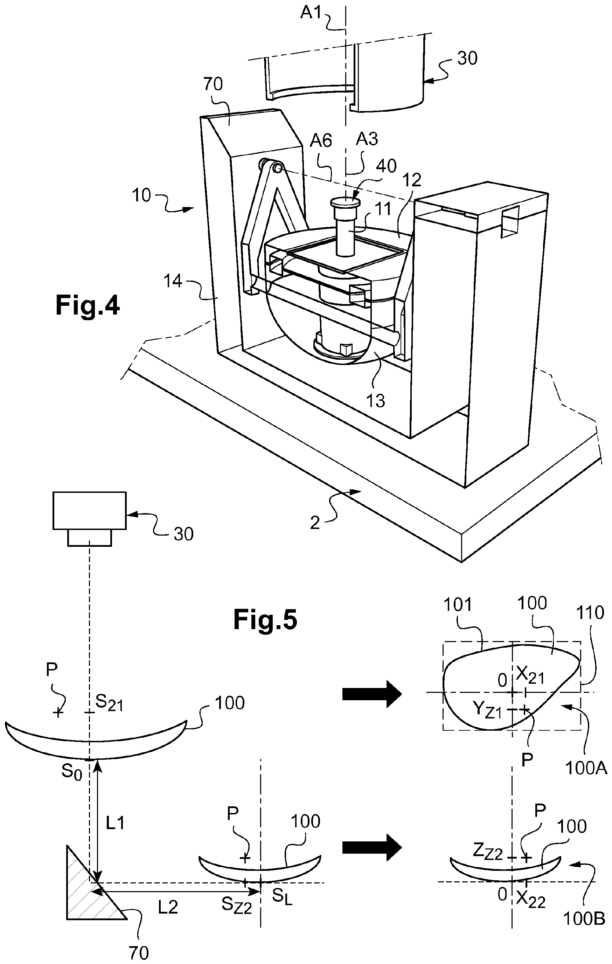

Comme le montre la figure 5, la mobilité du capteur d'images 30 et l'utilisation du miroir 70 permettent donc d'acquérir deux images 100A, 100B de la lentille de référence 100, vue sous deux angles différents. Ces deux images seront, dans la suite de cet exposé, appelées image de face 100A et image de côté 100B.

En variante, on pourrait prévoir que le capteur d'images reste immobile, et que le miroir soit mobile pour se placer dans le champ du capteur d'images afin de renvoyer vers celui-ci une image de côté de la lentille (via par exemple d'autres miroirs).

Dans la présente invention, lorsque la lentille de référence est percée, on souhaite acquérir au moins une autre image de la lentille de référence, vue sous un autre angle.

En effet, les seules vues de face et de côté de la lentille ne permettent pas de caractériser précisément les formes et positions des trous prévus dans la lentille de référence.

On précisera ici qu'il pourra s'agir de trous de perçage traversants, permettant par exemple de fixer la monture de lunettes à la lentille (cas des montures percées), ou de trous non traversants (débouchant sur une seule face de la lentille ou sur la tranche de la lentille). Ces trous non traversants, de sections pas nécessairement circulaires, pourront par exemple n'avoir qu'une fonction esthétique.

Pour caractériser précisément les formes et positions de ces trous, la présente invention propose d'acquérir d'autres images, sur lesquelles les trous sont sensiblement situés dans l'axe du capteur d'images 30.

Dans la suite de cet exposé, on considérera qu'il s'agit de trous de perçage traversants, débouchant sur les deux faces de la lentille.

Sur la figure 3, on a représenté un gland de blocage 90. Un tel gland de blocage comporte un plateau 91 revêtu d'un autocollant double-face à coller sur la lentille. Il comporte également un pion 92 cylindrique de révolution, qui est prévu pour être facilement saisi en vue de faciliter la préhension de la lentille.

Sur cette figure 3, on observe que le pion 92 présente une rainure 93 en creux dans sa face d'extrémité, qui s'étend selon le diamètre de ce pion et qui fournit une indication de l'orientation de la lentille autour de l'axe du pion 92.

Comme le montre la figure 2, la machine d'acquisition d'images 1 est alors équipée d'un set d'au moins deux embouts de blocage différents.

Il est ici prévu trois embouts de blocage 40, 50, 60.

Chaque embout de blocage 40, 50, 60 comporte :

- une partie de préhension 41, 51, 61 pour sa fixation sur la tige 11 selon un premier axe A1, et
- une partie d'accueil 42, 52, 62 pour sa fixation au gland de blocage 90 selon un second axe A2, l'angle d'inclinaison entre le premier axe A1 et le second axe A2 variant d'un embout de blocage 40, 50, 60 à l'autre.

Ici, les parties de préhension 41, 51, 61 des trois embouts de blocage 40, 50, 60 sont identiques. Elles sont prévues pour se fixer à la tige 11 par emboîtement. Elles se présentent alors sous la forme de manchons symétriques de révolution autour du premier axe A1. Ces manchons présentent des diamètres intérieurs identiques (au jeu de montage près) au diamètre extérieur de la tige 11, ce qui leur assure une bonne stabilité sur l'extrémité libre de la tige 11.

Les parties d'accueil 42, 52, 62 des trois embouts de blocage 40, 50, 60 sont quant à elles prévues pour se fixer au pion 92 du gland de blocage 90. Elles comportent à cet effet chacune une cavité permettant de loger le pion 92.

Comme cela apparaît en pointillés sur la figure 2, la cavité prévue en creux dans chaque partie d'accueil 42, 52, 62 est traversée par une nervure qui est prévue pour se loger dans la rainure 93 du pion 92. De cette manière, on s'assure que l'orientation de la lentille autour de l'axe A3 de la tige 11 ne change pas lorsqu'on positionne successivement la lentille sur les trois embouts de blocage 40, 50, 60.

Ici, les faces supérieures de ces parties d'accueil 42, 52, 62 présentent des formes identiques, mais elles sont orientées différemment par rapport aux parties de préhension 41, 51, 61.

L'axe de symétrie de la partie d'accueil 42, 52, 62 de chaque embout (appelé ici second axe A2) présente une inclinaison par rapport au premier axe A1 qui diffère d'un embout à l'autre.

Dans l'exemple représenté sur la figure 2, l'angle d'inclinaison entre le premier axe A1 et le second axe A2 est égal à 0 degré pour le premier embout de blocage 40, à 30 degrés pour le second embout de blocage 50, et à 15 degrés pour le troisième embout de blocage 60.

De cette manière, en fixant successivement la lentille de référence à la tige 11 au moyen de ces embouts de blocage 40, 50, 60, il est possible d'acquérir des images de la lentille de référence avec différents angles d'inclinaison.

En changeant d'embout de blocage, le risque est alors de perdre le référentiel de la lentille de référence entre les différentes acquisitions d'images.

Pour éviter cela, comme le montre la figure 2, les embouts de blocage 40, 50, 60 sont fabriqués de telle sorte que le point d'intersection entre les premier et second axes A1, A2 soit toujours situé à la même position par rapport à la partie de préhension 41, 51, 61 de l'embout de blocage.

De cette manière, en plaçant à chaque fois le centre boxing de la lentille de référence au niveau de ce point d'intersection, on s'assure de bien conserver le référentiel de la lentille de référence (ce référentiel étant ensuite conservé pour l'usinage de la lentille).

En l'espèce, ce point d'intersection sera situé à une distance donnée de la face supérieure de la partie d'accueil 42, 52, 62, cette distance correspondant à l'épaisseur du plateau 91 du gland de blocage 90 et de l'autocollant double-face utilisé.

Comme le montre la figure 5, on définira ici le cadre boxing 110 de la lentille de référence 100 comme étant le rectangle qui circonscrit le contour 101 de l'image 100A de la lentille de référence 100 vue de face, et dont deux des côtés sont parallèles à la ligne d'horizon de la lentille. On définira alors le centre boxing de la lentille de référence comme le point qui est situé au centre du cadre boxing 110, sur la face avant de cette lentille de référence 100.

Ici, les embouts de blocage 40, 50, 60 seront fabriqués soit à la demande, au moyen d'une imprimante 3D ou de toute autre technique adaptée (prototypage rapide, ...), soit en série par moulage d'une matière plastique.

Selon une variante de l'invention représentée sur la figure 4, on pourra prévoir d'utiliser un seul et même embout de blocage 40 pour fixer la lentille de référence, auquel cas le support 10 devra être monté mobile par rapport au châssis 2 de manière à pouvoir acquérir des images inclinées de la lentille de référence.

Le support 10 sera préférentiellement monté mobile par rapport au châssis 2 avec au moins deux mobilités de rotation autour de deux axes distincts, et deux mobilités de translation selon deux axes distincts.

Dans cette variante, la tige 11 n'est pas fixée au châssis 2 de la machine d'acquisition d'images 1, mais elle est montée sur le châssis 2 avec deux mobilités de rotation autour de deux axes A6, A7 non parallèles.

Cette tige 11 est ainsi montée mobile en rotation autour d'un premier axe A6 qui est perpendiculaire à l'axe principal A3 de la tige 11. Ce premier axe A6 est en pratique horizontal.

La tige 11 est en outre montée mobile en rotation autour d'un second axe A7 qui est perpendiculaire au premier axe A6. Ce second axe A7 est en pratique confondu avec l'axe principal A3.

Pour lui conférer ces deux mobilités, la tige 11 s'élève à partir d'un plateau 12, qui est monté mobile en rotation (autour de l'axe principal A3) sur un socle 13, ce socle 13 étant lui-même monté mobile en rotation (autour du premier axe A6) sur une embase 14 posée sur le châssis 2.

Ici, l'embase 14 présente une forme en U, avec une partie inférieure plane qui repose sur le châssis 2, et deux montants latéraux qui s'élèvent au-dessus du châssis 2.

Le socle 13 est alors relié à cette embase 14 par deux arches latérales en formes de V renversés, dont les extrémités sont fixées au socle 13 et dont les sommets portent des ergots montés pivotants dans deux paliers lisses de l'embase 14.

Le montage des ergots dans les paliers lisses de l'embase 14 est serré de telle sorte que, d'une part, l'opticien peut faire manuellement basculer le socle 13 autour du premier axe A6, et que, d'autre part, une fois basculé, le socle 13 reste en position inclinée et ne revient pas naturellement en position initiale.

Le plateau 12 comporte pour sa part une assise circulaire qui repose sur la face supérieure du socle 13. Il est prévu, en creux dans la face supérieure du socle 13 et dans l'assise circulaire du plateau 12, des gorges annulaires en regard qui permettent d'accueillir un anneau de guidage de la rotation du plateau 12 autour de l'axe principal A3.

De cette manière, en réglant la position angulaire du plateau 12 autour de l'axe principal A3 et celle du socle 13 autour du premier axe A6, il est possible de faire basculer la lentille de référence fixée à l'accessoire de blocage 40 dans une position inclinée par rapport à l'axe optique A4 du capteur d'images 30, afin d'acquérir des images inclinées de la lentille de référence.

Il est également possible de déplacer l'embase 14 en la faisant glisser sur le châssis 2, de manière à pouvoir placer l'axe de la tige 11 dans l'axe optique A4 du capteur d'images 30, ou à distance de celui-ci.

En variante, on pourrait prévoir d'utiliser des moteurs électriques pour actionner automatiquement les mobilités du support 10 par rapport au châssis 2. Ici encore, pour éviter tout problème de changement de référentiel lors du pivotement du socle 13 autour du premier axe A6, le support 10 est conçu de telle manière que le point d'intersection du premier axe A6 et de l'axe principal A3 est situé à une distance donnée de la face supérieure de la partie d'accueil 42 de l'accessoire de blocage 40, cette distance correspondant à l'épaisseur du plateau 91 du gland de blocage 90 et de l'autocollant double-face utilisé.

On notera par ailleurs sur la figure 4 que dans cette variante, le miroir 70 est fixé à l'extrémité de l'un des montants de l'embase 14.

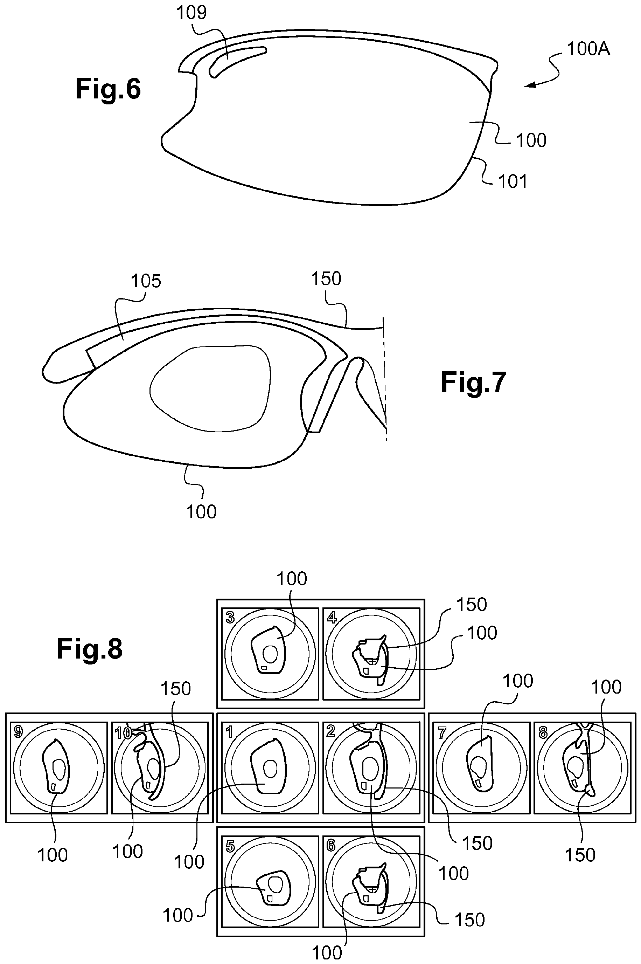

Sur les photos 3, 5, 7 et 9 de la figure 8, on a représenté quatre images inclinées de la lentille de référence 100 nue, acquises à l'aide de la machine d'acquisition d'images 1. Sur la photo 1 de cette figure 8, on a représenté une image de face de la lentille de référence 100 nue.

Sur les autres photos, on a représenté des images correspondantes de cette lentille de référence 100 équipée (vue de face, de côté, et inclinée).

Pour piloter les différents organes de la machine d'acquisition d'images 1, il est prévu un calculateur (non représenté) comportant un processeur, une mémoire vive (RAM), une mémoire morte (ROM), des convertisseurs analogiques-numériques, et différentes interfaces d'entrée et de sortie.

Grâce à ses interfaces d'entrée, le calculateur est adapté à recevoir de différentes interfaces homme/machine (écran tactile, bouton, ...) des signaux d'entrée relatifs à la volonté de l'opticien. L'opticien peut ainsi commander l'allumage de la source d'éclairage 20, l'acquisition d'une image par le capteur d'images 30, le traitement des images acquises, la mise en marche des moteurs électriques, ...

Dans sa mémoire vive, le calculateur mémorise les différentes images acquises de la lentille de référence.

Dans sa mémoire morte, le calculateur mémorise un logiciel de traitement des images acquises, qui permet de générer des paramètres de détourage d'une lentille neuve.

Enfin, grâce à ses interfaces de sortie, le calculateur est adapté à transmettre ces paramètres de détourage à au moins une machine de détourage de lentilles optiques.

Pour élaborer une consigne de détourage d'une lentille neuve, on procède alors en plusieurs étapes. Les étapes principales de ce procédé sont les suivantes :

a) une étape de démontage de la lentille de référence 100 équipée (c'est-à-dire montée dans la monture de lunettes 150) sur le support 10 de la machine d'acquisition d'images 1,

b) une étape d'acquisition, par le capteur d'images 30, d'au moins une première image de la lentille de référence 100 équipée,

c) une étape de démontage de la lentille de référence 100 et de fixation de cette lentille de référence 100 nue sur le support 10 de la machine d'acquisition d'images 1,

d) une étape d'acquisition, par le capteur d'images 30, d'au moins une seconde image de la lentille de référence 100 nue,

e) une étape de traitement des images acquises pour en déduire des paramètres de détourage de ladite lentille neuve, et

f) une étape d'élaboration de la consigne de détourage en fonction desdits paramètres de détourage.

A ce stade, on précisera que la consigne de détourage est généralement élaborée par la machine de détourage elle-même, à partir de différents paramètres de détourage. En effet, la consigne de détourage va être élaborée en fonction de la cinématique de la machine de détourage concernée, si bien qu'elle ne peut généralement pas être élaborée en amont.

On peut exposer en détail la mise en oeuvre des étapes a) à e) du procédé précité. L'étape f), bien connue de l'homme du métier et qui ne fait pas en propre l'objet de la présente invention, ne sera en revanche pas ici décrite en détail.

On précisera ici que les étapes a) et b) pourront être mises en oeuvre après les étapes c) et d), auquel cas il faudra remettre la lentille de référence dans la monture de lunettes après l'en avoir démontée. On notera également que les étapes b) et d) pourront comprendre l'acquisition de plusieurs images vues sous des angles différents.

Ici, au cours d'une première étape (correspondant à l'étape c), l'opticien démonte l'une des deux lentilles de référence 100 de la monture de lunettes 150, de manière à pouvoir acquérir des images de la lentille de référence 100 nue, sur lesquelles apparaissent l'ensemble du contour de cette lentille de référence 100.

Ici, on considérera que l'opticien dispose d'une machine d'acquisition d'images 1 comportant un support 10 du type de celui représenté sur la figure 4. Bien entendu, la mise en oeuvre du procédé serait sensiblement la même avec un support 10 du type de celui représenté sur la figure 1.

Après avoir extrait la lentille de référence 100 de sa monture, l'opticien fixe le gland de blocage 90 sur la lentille de référence 100 au moyen d'un autocollant double-face, en prenant soin que l'axe du pion 92 passe par le centre boxing de la lentille de référence 100. Des marquages prévus sur la lentille et sur le gland de blocage 90 pour identifier le centre boxing et l'axe du pion 92 permettent de faciliter cette opération.

L'opticien peut en variante s'aider d'un dispositif centreur-bloqueur dont l'utilisation est bien connue par ailleurs et permet d'obtenir des résultats plus précis.

Selon une autre variante, l'opticien pourrait utiliser un gland de blocage pneumatique, se présentant sous la forme d'une ventouse à rapporter sur la lentille et à fixer à cette dernière au moyen d'une pompe à vide.

Ici, l'opticien rapporte ensuite le gland de blocage 90 muni de la lentille de référence 100 sur l'accessoire de blocage 40 fixé à l'extrémité de la tige 11.

Il place ensuite le berceau 12 du support 10 dans une position initiale droite (dans laquelle l'axe principal A3 de la tige 11 se confond avec le second axe A7).

Alors, la machine d'acquisition d'images 1 est prête à acquérir des images de la lentille de référence 100.

A l'étape b), l'opticien commande l'acquisition d'images de la lentille de référence 100, via un moyen de saisie quelconque équipant la machine d'acquisition d'images 1 (clavier, écran tactile, ...).

Lors de cette étape, le capteur d'images 30 est commandé pour acquérir une image de face 100A de la lentille de référence 100 (voir figure 5).

Le calculateur commande ensuite le déplacement du capteur d'images 30 depuis sa position de base vers sa position escamotée, via par exemple un système de pignon-crémaillère commandé par un moteur électrique. Le calculateur commande ensuite l'acquisition d'une image de côté 100B de la lentille de référence 100.

Le calculateur commande ensuite le retour du capteur d'images 30 en position de base.

Lorsque la lentille de référence 100 présente des trous de perçage, l'opticien incline alors manuellement le berceau 12 du support 10 de telle manière que l'un des trous de perçage se trouve positionné sensiblement verticalement. Il commande ensuite l'acquisition d'une nouvelle image inclinée de la lentille. Il procède de la même manière pour tous les autres trous de perçage et pour tous les trous non traversants.

En variante, lorsque l'inclinaison du berceau est commandée par un moteur électrique, la consigne d'inclinaison envoyée au moteur électrique peut être calculée automatiquement par le calculateur.

Elle peut en particulier être calculée en fonction de la forme du trou de perçage sur l'image de face (sur cette image de face, le trou présente une forme oblongue et non circulaire). En effet, il est possible de déterminer sur cette image de face l'orientation du trou de perçage, et d'en déduire une consigne d'inclinaison à envoyer aux moteurs électriques.

Ainsi, à ce stade, si la lentille de référence 100 ne présente pas de trou de perçage, la mémoire vive du calculateur mémorise au moins deux images de la lentille de référence 100 vue de face (c'est-à-dire vue de la face avant) et vue de dos (c'est-à-dire vue de la face arrière). En revanche, si la lentille de référence 100 présente par exemple quatre trous de perçage, la mémoire vive du calculateur mémorise six images de la lentille de référence 100.

Une fois ces images acquises, l'opticien remonte la monture de lunettes 150 sur la lentille de référence 100, alors que cette dernière est encore montée sur la tige 11.

Comme cela apparaît sur la figure 8, il peut ainsi acquérir d'autres images de la lentille de référence 100 montée dans sa monture de lunettes 150.

En pratique, l'opticien commande l'acquisition de deux autres images : une image de face et une image de côté de la lentille de référence 100 équipée (c'est-à-dire montée dans sa monture de lunettes 150).

Enfin, l'opticien commande le démarrage du traitement des images acquises par le calculateur.

Si les images ont été acquises à l'aide d'un objectif non télécentrique, la première opération de traitement consiste à redimensionner les images mémorisées.

En effet, dans ce cas, la distance entre l'objectif et la lentille de référence 100 varie d'un point à l'autre de la lentille, ce qui génère une distorsion de l'image acquise qu'il convient de corriger afin d'obtenir des résultats de mesure fiables.

Dans le cas où l'objectif utilisé est télécentrique, cette première opération est inutile.

Ici, cette première opération consiste alors à corriger les coordonnées de chaque point caractéristique de l'image acquise.

Le préalable de cette opération est de déterminer la courbure de la lentille de référence 100, cette courbure permettant ensuite de déterminer la distance séparant le capteur d'images 30 de la lentille de référence 100, ce qui permettra de remettre chaque image à l'échelle.

Pour déterminer cette courbure, on pourra acquérir le rayon de courbure de la face avant convexe de la lentille de référence 100 soit en la lisant dans une base de données, soit en la mesurant à l'aide d'un appareil adapté et en la saisissant manuellement sur le clavier, soit en la calculant sur l'image de la lentille de profil.

En effet, comme le montre la figure 5, en détectant la forme du contour de la lentille de référence vue de côté, le calculateur peut déterminer le rayon de courbure de la face avant convexe de la lentille de référence 100 (qui est considérée comme présentant une forme de calotte sphérique).

Ensuite, pour bien comprendre comment le calculateur opère l'opération de mise à l'échelle des images acquises, on peut s'intéresser à un point P repérable sur l'image de face 100A et sur l'image de côté 100B de la lentille de référence 100 nue (voir figure 5).

On cherche alors à déterminer les coordonnées tridimensionnelles $X_{mm}$, $Y_{mm}$, $Z_{mm}$ de ce point P, exprimées en millimètres, alors qu'on ne dispose que des coordonnées bidimensionnelles $(X_{Z1}, Y_{Z1})$ et $(X_{Z2}, Z_{Z2})$ de ce point P, relevées en pixels sur les deux images 100A, 100B.

On peut écrire le système de six équations suivantes :

$$X_{mm} = X_{Z1} * S_{Z1},$$

avec $S_{Z1}$ la hauteur du point P par rapport au centre boxing (qui est déduit de la courbure de la lentille),

$$Y_{mm} = Y_{Z1} * S_{Z1},$$

$$S_{Z1} = a * Z_{mm} + S_0,$$

a et $S_0$ étant deux constantes connues (déterminées lors de la calibration de la machine d'acquisition d'images 1),

$$X_{mm} = X_{Z2} * S_{Z2},$$

avec $S_{Z2}$ l'écart horizontal entre le point P et le centre boxing (qui est déduit de la courbure de la lentille),

$$Z_{mm} = Z_{Z2} * S_{Z2},$$

$$S_{Z2} = a * (Y_{mm} - (L1+L2)) + S_0,$$

L1 et L2 étant deux constantes connues (déterminées lors de la calibration de la machine d'acquisition d'images 1).

En pratique, seul le résultat de la résolution de ce système d'équation est mémorisé dans la mémoire morte du calculateur. Ce résultat est le suivant :

$$Y_{mm} = [1 / (1 - Y_{Z1} * a^2 * Z_{Z2})] * [Y_{Z1} * S_0 * (1 + a * Z_{Z2}) - Y_{Z1} * a^2 * Z_{Z2} *(L1 + L2)]$$

$$Z_{mm} = Z_{Z2} * (a * (Y_{mm} - (L1+L2)) + S_0)$$

$$X_{mm} = X_{Z1} * (a * Z_{mm} + S_0).$$

En appliquant ce résultat à tous les points caractéristiques de l'image, le calculateur peut alors redimensionner les images acquises de façon à obtenir des résultats non déformés malgré l'utilisation d'un objectif non télécentrique.

Une fois les images acquises redimensionnées, la seconde opération consiste à traiter les images de la lentille de référence 100 nue.

La première des images traitées est l'image vue de face 100A.

On a par exemple représenté sur la figure 6 une telle image vue de face 100A, acquise par le capteur d'images 30 et redimensionnée par le calculateur.

Afin d'obtenir des paramètres de détourage à transmettre à une machine de détourage, le calculateur va examiner le contour 101 de l'image vue de face 100A de la lentille de référence 100, il va déterminer la ou les zones de la lentille qui vont être recouvertes par la monture de lunettes, et il va caractériser le ou les trous de perçage prévus dans la lentille de référence 100.

Sur l'image vue de face 100A, le contour 101 de la lentille de référence 100 présente des zones convexes et deux zones concaves localisées. Ce contour 101 est alors caractérisé par une pluralité de points qui s'étendent le long de son pourtour, et qui sont régulièrement répartis sur celui-ci. Les coordonnées bidimensionnelles de ces points formeront des premiers paramètres de détourage à transmettre à la machine de détourage.

Le calculateur va ensuite traiter en combinaison les images vues de face de la lentille de référence 100 nue et de la lentille de référence 100 équipée (voir vues 1 et 2 de la figure 8). Il pourra éventuellement traiter en combinaison les images vues de côté de la lentille de référence 100 équipée et de la lentille de référence 100 nue.

Il va ainsi pouvoir déterminer la zone située à l'intérieur du contour 101 qui correspond à la zone de la lentille de référence 100 qui est recouverte par la monture de lunettes 150. Cette zone 105 est représentée sur la figure 7.

Pour cela, en repérant la position du contour de la monture de lunettes 150, le calculateur va reporter ce contour sur l'image vue de face 100A de la lentille de référence 100 nue, et ainsi caractériser cette zone 105.

Il va ainsi pouvoir déterminer la ou les zones de conflits situées à l'intérieur de la zone 105 qui correspondent aux endroits où la lentille neuve risquera d'interférer avec la monture de lunettes 150 et créer des collisions par exemple avec les plaquettes nasales ou les bords avant et/ou arrières de la monture. En effet, contrairement à la lentille de référence 100 qui présente généralement une épaisseur réduite, la lentille neuve pourra présenter une importante épaisseur au bord. C'est la raison pour laquelle ce n'est pas parce que la lentille de référence 100 n'interfère pas avec la monture de lunettes 150 qu'il en sera de même avec la lentille neuve.

En déterminant la forme tridimensionnelle d'une partie de la monture de lunettes 150 à l'aide des images vues de face et de côté acquises, ou en déterminant les positions des points de la monture susceptibles d'interférer avec la lentille neuve, le calculateur pourra alors déterminer si un tel conflit risque d'arriver, compte tenu de la forme de la lentille neuve.

Si un tel conflit est détecté, le calculateur pourra déterminer des seconds paramètres de détourage, visant à créer un biseau incliné dans les zones de conflit avec les plaquettes nasale et/ou à permettre d'usiner un épaulement (ou un renfoncement) dans la tranche de la lentille neuve comme précisé dans le brevet US7643899. Un tel usinage permettra ainsi d'éviter tout problème de montage de la lentille neuve dans la monture de lunettes 150.

Le calculateur va ensuite traiter l'image vue de face 100A de la lentille ophtalmique 100 nue afin de déterminer si cette lentille présente un ou plusieurs trous de perçage ou trou non traversant.

Si un trou de perçage est détecté, le calculateur va sélectionner, parmi les différentes images acquises de la lentille de référence nue, celle sur laquelle les contours des débouchés avant et arrière du trou de perçage considéré sont les plus proches. Cette image correspondra à celle pour laquelle le trou de perçage était orienté sensiblement dans l'axe du capteur d'images 30. En variante, cette sélection pourra être opérée visuellement par l'opticien.

C'est alors sur cette image que le calculateur 100 va calculer la forme et la position de ce trou de perçage. La forme et la position de chaque trou de perçage formeront des troisièmes paramètres de détourage.

Le détourage de la lentille neuve pourra alors être opéré en bloquant la lentille neuve non encore détourée à l'aide de l'accessoire de blocage 40, afin de conserver le même référentiel.

## Revendications

1. Procédé de détermination de paramètres de détourage d'une lentille optique à détourer en vue de son montage dans une monture de lunettes (150) dans laquelle est montée au moins une lentille optique de référence (100), comprenant :

   - une étape de fixation de ladite lentille optique de référence (100) sur un support (10) d'une machine d'acquisition d'images (1),
   - une première étape d'acquisition, par un capteur d'images (30) de ladite machine d'acquisition d'images (1), d'au moins une première image de ladite lentille optique de référence (100) démontée de la monture de lunettes (150), et
   - une étape de traitement de chaque première image acquise pour en déduire des paramètres de détourage de ladite lentille optique à détourer,

   **caractérisé en ce qu'**il comporte, avant ou après ladite première étape d'acquisition, une seconde étape d'acquisition par le capteur d'images (30) d'une seconde image de ladite lentille optique de référence (100) montée dans la monture de lunettes (150), et
   **en ce que** au cours de ladite étape de traitement, une partie au moins desdits paramètres de détourage sont élaborés en fonction également de ladite seconde image.

2. Procédé de détermination selon la revendication 1, dans lequel, au cours des première et seconde étapes d'acquisition, ladite lentille optique de référence (100) est fixée sur ledit support (10) dans une même position.

3. Procédé de détermination selon l'une des revendications 1 et 2, dans lequel le capteur d'images (30) comportant un objectif télécentrique, au cours de l'étape de traitement, lesdits paramètres de détourage sont directement mesurés ou calculés sur chaque image acquise.

4. Procédé de détermination selon l'une des revendications 1 et 2, dans lequel le capteur d'images (30) comportant un objectif non télécentrique, au cours de l'étape de traitement, on acquiert la courbure de l'une des faces de ladite lentille optique de référence (100), on met à l'échelle chaque image acquise en fonction de ladite courbure, et on mesure ou calcule chaque paramètre de détourage sur les images mises à l'échelle.

5. Procédé de détermination selon l'une des revendications 1 à 4, dans lequel, au cours de ladite première et/ou de ladite seconde étape d'acquisition, le capteur d'images (30) acquiert au moins deux images de ladite lentille optique de référence (100) vue sous deux angles différents.

**6.** Procédé de détermination selon la revendication 5, dans lequel, au cours de ladite première et/ou de ladite seconde étape d'acquisition, le capteur d'images (30) acquiert :

- une image de face de ladite lentille optique de référence (100), dans une position dans laquelle la lentille optique de référence s'étend dans un plan moyen sensiblement orthogonal à un axe du chemin optique dudit capteur d'images (30), et
- une image de côté de ladite lentille optique de référence (100), dans une position dans laquelle la lentille optique de référence (100) s'étend dans un plan moyen sensiblement parallèle à un axe du chemin optique dudit capteur d'images (30).

**7.** Procédé de détermination selon les revendications 4 et 6, dans lequel, à l'étape de traitement, la courbure de l'une des faces de ladite lentille optique de référence (100) est mesurée sur ladite image de côté.

**8.** Procédé de détermination selon l'une des revendications 6 et 7, dans lequel lesdites images de face et de côté sont acquises successivement, un miroir (70) étant placé sur le chemin optique du capteur d'images (30) entre les deux acquisitions d'images.

**9.** Procédé de détermination selon l'une des revendications 6 à 8, dans lequel, au cours de l'étape d'élaboration, on relève sur ladite image de face de la lentille optique de référence (100) démontée la forme bidimensionnelle du contour (101) de la lentille optique de référence (100).

**10.** Procédé de détermination selon l'une des revendications 5 à 9, dans lequel, au cours de ladite première et/ou de ladite seconde étape d'acquisition, lesdites au moins deux images de ladite lentille optique de référence (100) vue sous deux angles différents sont acquises successivement, en inclinant, entre les deux acquisitions d'images, ladite lentille optique de référence (100) par rapport au capteur d'images (30) d'un angle connu autour d'un axe de rotation qui passe par le centre boxing de la lentille optique de référence (100).

**11.** Procédé de détermination selon l'une des revendications 5 à 10, dans lequel, au cours de l'étape d'élaboration :

- on recherche chaque trou de perçage de la lentille optique de référence (100),
- pour chaque trou de perçage trouvé, on sélectionne l'image sur laquelle les contours des débouchés avant et arrière dudit trou de perçage sont les plus proches, et
- au moins un paramètre de détourage est affecté à la caractérisation de la forme et de la position dudit trou de perçage sur l'image sélectionnée.

**Patentansprüche**

**1.** Verfahren zur Bestimmung von Schleifparametern für eine optische Linse, die für ihre Montage in ein Brillengestell (150) geschliffen werden soll, in dem mindestens eine optische Referenzlinse (100) montiert ist, umfassend:

- einen Schritt der Befestigung der optischen Referenzlinse (100) an einem Träger (10) eines Bilderfassungsgerätes (1),
- einen ersten Schritt der Erfassung mindestens eines ersten Bildes der aus dem Brillengestell (150) demontierten optischen Referenzlinse (100) durch einen Bildsensor (30) des Bilderfassungsgerätes (1) und
- einen Schritt der Verarbeitung jedes erfassten ersten Bildes, um daraus Schleifparameter der zu schleifenden optischen Linse abzuleiten,

**dadurch gekennzeichnet, dass** es vor oder nach dem ersten Schritt der Erfassung einen zweiten Schritt der Erfassung eines zweiten Bildes der in das Brillengestell (150) montierten optischen Referenzlinse (100) durch den Bildsensor (30) umfasst, und dadurch, dass im Schritt der Verarbeitung mindestens ein Teil der Schleifparameter auch entsprechend dem zweiten Bild ausgearbeitet wird.

**2.** Verfahren zur Bestimmung nach Anspruch 1, bei dem im ersten und zweiten Schritt der Erfassung die optische Referenzline (100) in einer selben Position am Träger (10) befestigt wird.

**3.** Verfahren zur Bestimmung nach einem der Ansprüche 1 und 2, bei dem der Bildsensor (30) ein telezentrisches Objektiv umfasst und im Schritt der Verarbeitung die Schleifparameter direkt anhand jedes erfassten Bildes gemessen oder berechnet werden.

4. Verfahren zur Bestimmung nach einem der Ansprüche 1 und 2, bei dem der Bildsensor (30) ein nichttelezentrisches Objektiv umfasst und im Schritt der Verarbeitung die Krümmung einer der Flächen der optischen Referenzlinse (100) erfasst wird, jedes entsprechend der Krümmung erfasste Bild skaliert wird und jeder Schleifparameter anhand der skalierten Bilder gemessen oder berechnet werden.

5. Verfahren zur Bestimmung nach einem der Ansprüche 1 bis 4, bei dem im ersten und/oder zweiten Schritt der Erfassung der Bildsensor (30) mindestens zwei Bilder der optischen Referenzlinse (100) erfasst, die unter zwei verschiedenen Winkeln betrachtet wird.

6. Verfahren zur Bestimmung nach Anspruch 5, bei dem im ersten und/oder zweiten Schritt der Erfassung der Bildsensor (30) Folgendes erfasst:

   - ein Bild von der Stirnfläche der optischen Referenzlinse (100) in einer Position, in der die optische Referenzlinse sich in einer mittleren Ebene erstreckt, die im Wesentlichen orthogonal zu einem optischen Weg des Bildsensors (30) verläuft, und
   - ein Bild von der Seite der optischen Referenzlinse (100) in einer Position, in der die optische Referenzlinse (100) sich in einer mittleren Ebene erstreckt, die im Wesentlichen parallel zu einer Achse des optischen Weges des Bildsensors (30) verläuft.

7. Verfahren zur Bestimmung nach einem der Ansprüche 4 und 6, bei dem im Schritt der Verarbeitung die Krümmung einer der Stirnflächen der optischen Referenzlinse (100) auf dem Bild der Seite gemessen wird.

8. Verfahren zur Bestimmung nach einem der Ansprüche 6 und 7, bei dem die Bilder von der Stirnfläche und der Seite nacheinander erfasst werden, wobei zwischen den beiden Bilderfassungen ein Spiegel (70) im optischen Weg des Bildsensors (30) platziert wird.

9. Verfahren zur Bestimmung nach einem der Ansprüche 6 bis 8, bei dem im Schritt der Ausarbeitung aus dem Bild der Stirnfläche der demontierten optischen Referenzlinse (100) die zweidimensionale Kontur (101) der optischen Referenzlinse (100) bestimmt wird.

10. Verfahren zur Bestimmung nach einem der Ansprüche 5 bis 9, bei dem im ersten und/oder zweiten Schritt der Erfassung die mindestens zwei Bilder der optischen Referenzlinse (100), die unter zwei verschiedenen Winkeln betrachtet wird, nacheinander erfasst werden, wobei zwischen den beiden Bilderfassungen die optische Referenzlinse (100) bezüglich des Bildsensors (30) um einen bekannten Winkel um eine Rotationsachse geneigt wird, die durch das optische Zentrum der optischen Referenzlinse (100) verläuft.

11. Verfahren zur Bestimmung nach einem der Ansprüche 5 bis 10, bei dem im Schritt der Ausarbeitung:

    - jedes Bohrloch der optischen Referenzlinse (100) gesucht wird,
    - für jedes gefundene Bohrloch das Bild ausgewählt wird, auf dem die Konturen der Öffnungen vor und hinter dem Bohrloch einander am nächsten sind, und
    - mindestens ein Schleifparameter der Charakterisierung der Form und der Position des Bohrlochs auf dem ausgewählten Bild zugeordnet wird.

**Claims**

1. Method of determining parameters for trimming an optical lens to be trimmed in view of its mounting in a spectacle frame (150) in which is mounted at least one reference optical lens (100), comprising:

   - a step of fixing the said reference optical lens (100) on a support (10) of a machine for acquiring images (1),
   - a first step of acquiring, with an image sensor (30) of the said machine for acquiring images (1), at least one first image of the said reference optical lens (100) removed from the spectacle frame (150), and
   - a step of processing each acquired first image in order to deduce therefrom trimming parameters for the said optical lens to be trimmed,

**characterized in that** it comprises, before or after the said first acquiring step, a second step of acquiring with the image sensor (30) a second image of the said reference optical lens (100) mounted in the spectacle frame (150), and **in that** in the said processing step, at least some of the said trimming parameters are defined as a function also of the said second image.

2. Determining method according to Claim 1, in which, in the first and second acquiring steps, the said reference optical lens (100) is fixed to the said support (10) in one and the same position.

3. Determining method according to one of Claims 1 and 2, in which, if the image sensor (30) comprises a telecentric objective, in the processing step, the said trimming parameters are calculated or measured directly on each acquired image.

4. Determining method according to one of Claims 1 and 2, in which, if the image sensor (30) comprises a non-telecentric objective, in the processing step, the curvature of one of the faces of the said reference optical lens (100) is acquired, each acquired image is scaled as a function of the said curvature, and each trimming parameter is calculated or measured on the scaled images.

5. Determining method according to one of Claims 1 to 4, in which, in the said first and/or the said second acquiring step, the image sensor (30) acquires at least two images of the said reference optical lens (100) viewed from two different angles.

6. Determining method according to Claim 5, in which, in the said first and/or the said second acquiring step, the image sensor (30) acquires:

   - a face-on image of the said reference optical lens (100), in a position in which the reference optical lens extends in a mean plane substantially orthogonal to an axis of the optical path of the said image sensor (30), and
   - a side-on image of the said reference optical lens (100), in a position in which the reference optical lens (100) extends in a mean plane substantially parallel to an axis of the optical path of the said image sensor (30).

7. Determining method according to Claims 4 and 6, in which, in the processing step, the curvature of one of the faces of the said reference optical lens (100) is measured on the said side-on image.

8. Method of determining according to one of Claims 6 and 7, in which the said face-on and side-on images are acquired successively, a mirror (70) being placed in the optical path of the image sensor (30) between the two image acquisitions.

9. Determining method according to one of Claims 6 to 8, in which, in the defining step, the two-dimensional shape of the outline (101) of the reference optical lens (100) is ascertained from the said face-on image of the removed reference optical lens (100).

10. Determining method according to one of Claims 5 to 9, in which, in the said first and/or the said second acquiring step, the said at least two images of the said reference optical lens (100) viewed from two different angles are acquired successively, while inclining, between the two image acquisitions, the said reference optical lens (100) with respect to the image sensor (30) by a known angle about an axis of rotation which passes through the boxing center of the reference optical lens (100).

11. Determining method according to one of Claims 5 to 10, in which, during the defining step:

   - a search is conducted for each drill hole of the reference optical lens (100),
   - for each drill hole found, the image is selected on which the outlines of the front and rear openings of the said drill hole are the closest, and
   - at least one trimming parameter is assigned to the characterization of the shape and of the position of the said drill hole on the selected image.

30

A5

2

1

A4

70

A3

11    10

21

**Fig.1**

20

2

90

93

**Fig.3**

91    92

**Fig.2**

A2         A2        50

40         42        52

41         51

A2

A2        60

62

61

A1         A1        A1

**Fig.4**

**Fig.5**

Fig.6

109

100A

100

101

Fig.7

105

150

100

Fig.8

100

150

100

3

4

150

9

10

1

2

7

8

100

150

100

100

100

150

100

5

6

100

150

100

150

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2489466 A
- US 7643899 B